# EUROPEAN PATENT APPLICATION

(11) **EP 3 646 723 A1**
(43) Date of publication of application: **06.05.2020**
(21) Application number: 19751789.9
(22) Date of filing: 24.01.2019
(51) Int. Cl.: A01K 85/14

(54) **ASP LURE**

(30) Priority: 12.02.2018 RU 2018105178
(71) Applicant: Ishutin, Vladislav Aleksandrovich, Samara, 443090 (RU)
(72) Inventor: Ishutin, Vladislav Aleksandrovich, Samara, 443090 (RU)
(74) Representative: Jeck, Anton
(86) International application number: PCT/RU2019/000041
(87) International publication number: WO 2019/156594

(57) **Abstract**

The present asp lure relates to recreational and sport fishing and is intended for catching a fish at the surface of the water, and can also be used for other methods of fishing. The technical problem solved by the utility model consists in creating a lure design that allows the lure to move at the surface of the water during fishing. This problem is solved by an asp lure comprising a metal body having a streamlined shape and provided with apertures that allow for fastening a fishing line and a hook, wherein the lure body is provided with a plate disposed in the upper part of the lure, and the apertures are disposed below the plate at opposite ends.

## Description

The utility model relates to recreational and sport fishing and, specifically, to artificial baits, and is intended for catching a fish, primarily, asp, at the very surface of the water, while it can also be used for other fishing methods.

There is a number of various lures known from the prior art, which are intended for top-water fishing, including asp fishing. These include various pilkers, wobblers, spinners, and devons. The closest prior art includes spoon lures (blinkers), such as Kastmaster, Sabunaev trihedron, and a finned troll (patent RU 2005133935A, 10-May-2007). A well-known Kastmaster lure [M. Filatov, "Favorite lure ", Rybachte s nami, No. 24 (2003)] is made of a round metal bar cut at a very acute angle so that the resulting bait has an oval shape with flat sides. Moreover, such lure is characterized by the fact that the sides thereof are not parallel, but are rather located at a certain angle relative to each other, which, according to the manufacturers, creates its unique float and represents a specific feature of such lure. Based on the large amount of literature devoted to asp fishing, it can be concluded that to ensure successful asp fishing, it is necessary to achieve the movement of the bait at the very surface of the water, when the bait is moving, practically without going deeper. A Kastmaster lure represents a bait, in which the center of gravity and the center of buoyancy almost coincide, while the center of gravity of the lure is still slightly higher, which causes the lure to constantly overturn and go deeper as it moves, since there is no moment of forces which would stabilize its horizontal position. Therefore, such lure moves at a certain depth even when trolled at a maximum speed. The Sabunaev trihedron [V.B. Sabunaev, Sports Fishing, Lenizdat (1972), Fig. 59(a)], designed by a then famous Leningrad fisherman, was primarily intended for asp fishing, but it has the same disadvantage of not being able to move along the very surface of the water due to the design thereof. Having a triangular cross-section, which creates only a limited buoyancy, the Sabunaev trihedron moves through the water column at a depth of about 2-3 meters and only rises to about 50-60 centimeters when trolled fast. The trihedron has a simple geometric shape. Its cross-section represents an equilateral triangle, thus, making it easy to find the center of buoyancy and the center of gravity. The center of buoyancy can be determined by connecting the midpoints of the sides of the trihedron triangular cross-section with a straight line and locating the desired point at the intersection of this line with the vertical axis. Since the triangle is equilateral, the center of gravity will be located at the point of intersection of the angle bisectors, and because of the bevels in the front and rear of the lure, it will even be slightly higher. As can be seen from the above, the center of gravity of the Sabunaev trihedron, similar to that of Kastmaster lure, is located above the center of buoyancy, which is why this lure too will constantly tend to overturn and fall into the depth. Selected as a prototype is the lure having a wing-like fin on its surface (patent RU 2005133935A, 10-May-2007). The lure comprises a base in the form of a streamlined metal element provided with holes and a fin located at an angle of up to 90° relative to the base plane and a longitudinal axis thereof. The fin is embodied in the form of a fragment of an ellipse so that the maximum and minimum curvature radii are at the opposite sides of the base. With such design, the fin has a different width along its length and is located across the oncoming flow, which does not contribute to creating buoyancy, but rather results in lure rotation relative to its axis during movement.

The technical objective to be achieved by the utility model is to create a lure design, which would enable its movement at the very surface of the water during fishing.

This objective is achieved by the fact that the asp lure comprises a streamlined metal body provided with holes to allow for the attachment of a fishing line and a hook, wherein said lure body is further provided with a petal located in the upper part thereof, while the holes are located under the petal on the opposite sides. The petal located in the upper part of the lure acts as a fin, and since the holes are located below the plane of the petal, it creates buoyancy allowing the lure to move along the very surface of the water.

The technical solution is illustrated by the drawings, where Fig. 1 shows the front view, Fig. 2 shows the side view, and Fig. 3 shows the perspective view of the lure. Fig. 4 shows the lure position during movement. Fig. 4 and Fig. 5 (front projection of the lure) also show the center of gravity (F_{gra}) and center of buoyancy (F_{buo}).

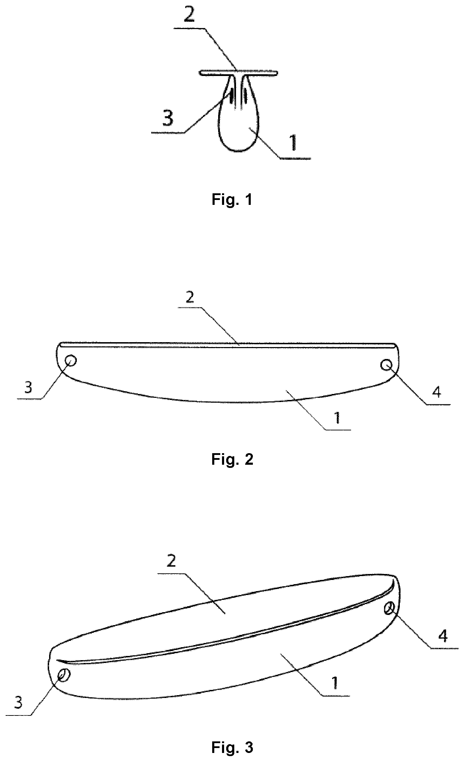

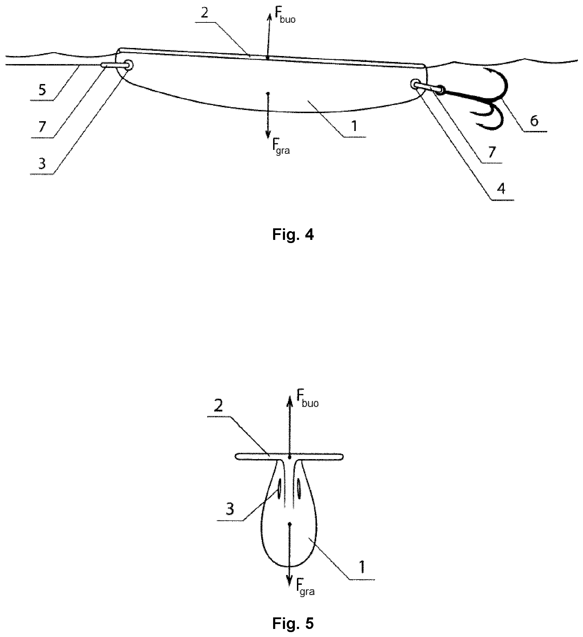

Figure 1 shows lure body (1), petal (2), and front hole (3). Figures 2 and 3 show lure body (1), petal (2), and front (3) and rear (4) holes, respectively. Figure 4 shows lure body (1), petal (2), front hole (3), rear hole (4), fishing line (5), hook (6), split rings (7), as well as center of gravity (F_{gra}) and center of buoyancy (F_{buo}).

Structurally, the device consists of the following components: streamlined lure body (1) with an integral component (2) embodied in the form of a petal located in the upper part of the lure perpendicular thereto, acting as a fin, and two holes located in the front (3) and rear (4) parts of the lure intended for attaching a fishing line (5) and hook (6), respectively, via split rings (7).

The lure functions as follows. During fishing, the lure movement is enabled by tensioning fishing line (5) connected to front hole (3) of lure (1) via split ring (7). Petal (2) located on top of the lure, due to its location above the point (7) of attachment of the fishing line, acts as a unique fin (similar to that on a children's kite), which allows the lure to rise to the very surface of the water in the oncoming water flow (Fig. 4). This further results from the fact that due to the top position of the petal, the center of buoyancy is located above the center of gravity at a sufficient vertical distance therefrom, thus, creating a moment of forces stabilizing the lure in the horizontal plane during its movement (Fig. 5). This is further assisted by hook (6), the weight of which is applied to hole (4) via split ring (7) located below petal (2), which creates an additional stabilizing moment.

## Claims

1. n asp lure, comprising a streamlined metal body provided with holes for attaching a fishing line and a hook, **characterized in that** the body of said lure is provided with a petal located in the upper part thereof, while the holes are located under the petal on the opposite sides.
